**Europäisches Patentamt**

**European Patent Office**

**Office européen des brevets**

(11) Veröffentlichungsnummer: **0 222 227**
**A1**

(12) # EUROPÄISCHE PATENTANMELDUNG

(21) Anmeldenummer: **86114728.8**

(22) Anmeldetag: **23.10.86**

(51) Int. Cl.⁴: **F 16 L 59/14**

(30) Priorität: **23.10.85 DE 3537720**

(43) Veröffentlichungstag der Anmeldung:
**20.05.87 Patentblatt 87/21**

(84) Benannte Vertragsstaaten:
**AT CH FR IT LI**

(71) Anmelder: **E. Missel GmbH & Co.**
**Hortensienweg 27**
**D-7000 Stuttgart 50(DE)**

(72) Erfinder: **Schäfer, Wolfgang**
**Endersbacherstrasse 51**
**D-7000 Stuttgart 50(DE)**

(74) Vertreter: **Dipl.-Phys.Dr. Manitz Dipl.-Ing., Dipl.-Wirtsch.**
**Finsterwald Dipl.-Chem.Dr. Heyn Dipl.-Phys. Rotermund**
**Morgan, B.Sc.(Phys)**
**Robert-Koch-Strasse 1**
**D-8000 München 22(DE)**

(54) **Dämmanordnung für Rohrleitungen und dergleichen.**

(57) Es wird eine Dämmanordnung für Rohrleitungen beschrieben, bei der zum Zwecke der Verhinderung einer Verschlechterung der Dämmeigenschaften im montierten Zustand in dem Materialaufbau zumindest ein luft- und diffusionsdichter Schutzmantel (3,4,5) vorgesehen ist.

FIG. 1

EP 0 222 227 A1

0222227

Die Erfindung betrifft eine insbesondere für Rohrleitungen bestimmte Dämmanordnung.

Anforderungen an die Auslegung von Dämmungen sind in DIN 1988 festgehalten, wobei für die Praxis sehr wichtige Forderungen darin bestehen, daß die Anwendungsgrenztemperaturen sowie vorgeschriebene Betriebstemperaturen eingehalten werden und verhindert wird, daß eine Durchfeuchtung von Dämmschichten auftritt.

Eine Durchfeuchtung von Dämmstoffen verschlechtert ihre Dämmeigenschaften entscheidend und muß daher möglichst vermieden werden, da im Falle einer Durchfeuchtung die zunächst vorhandenen guten Dämmeigenschaften eines trockenen, geringe Wärmeleitfähigkeit aufweisenden Dämmstoffes weitestgehend verlorengehen.

Die hauptsächlichsten Gefahren bezüglich einer Durchfeuchtung von Dämmaterialien resultieren aus Kondens- bzw. Tauwasserbildung und aus der Wasserdampfdiffusion.

So kann beispielsweise an Kaltwasserleitungen und insbesondere an Kühlmittelleitungen eine ungenügende Wärmedämmung zur Kondenswasserbildung auf der Dämmstoffoberfläche und ein ungenügender Wasserdampfdiffusionswiderstand zum Eindringen von Kondenswasser in den Dämmstoff führen.

Bekanntlich entsteht auf der Oberfläche der Dämmung dann Kondens- bzw. Tauwasser, wenn deren Temperatur die Taupunkttemperatur der umgebenden Luft unterschreitet, wobei die Taupunkttemperatur abhängig ist von der Umgebungstemperatur und der relativen Luftfeuchte. Entgegengewirkt werden kann der Tauwasserbildung auf der Ummantelung dadurch, daß die Dämmung so dimensioniert wird, daß die Oberflächentemperatur der Ummantelung bzw. Dämmung stets höher ist als die Taupunkttemperatur der Umgebungsluft.

Wasserdampfdiffusion wird hervorgerufen durch die Partialdruckdifferenz, die einen molekularen Transport des Wasserdampfes zur Folge hat. Durch die in Richtung des Partialdruckgefälles verlaufende Wasserdiffusion können je nach Luftfeuchte beträchtliche Wasserdampfströme in der Dämmung oder durch die Dämmung wandern, was ohne Vorsehen geeigneter Gegenmaßnahmen zum Auftreten von Tauwasser innerhalb des Dämmstoffes führen kann.

Ferner ist zu erwähnen die Tauwasserbildung in der Dämmung infolge des Luftaustausches mit der Umgebung. Je nach Höhe der Temperatur und der relativen Luftfeuchte der Außenluft kann der Feuchtigkeitstransport durch Luftströmung wesentlich höher sein als der Feuchtigkeitstransport infolge von Dampfdiffusion. Dies kann wiederum dazu führen, daß sich an der Innenseite der Ummantelung und am äußeren Bereich der Wärmedämmung Tauwasser bildet. Das Tauwasser gelangt kapillar in den Dämmstoff, bei dem es sich häufig um eine Faserdämmung handelt, durchfeuchtet diesen und mindert seinen Dämmwert entscheidend. In ungünstigen Fällen treten aufgrund der erhöhten Sauerstoffanreicherung im Dämmstoff sowohl Zerstörungen der betriebstechnischen Anlageteile als auch der Ummantelung aufgrund von Korrosionseffekten auf.

Aufgabe der Erfindung ist es, eine Dämmanordnung zu schaffen, welche die vorstehend aufgeführten Nachteile verhindert und dennoch in der Verwendung einfach und unproblematisch ist.

Die bevorzugten Anwendungsmöglichkeiten findet die erfindungsgemäße Dämmanordnung in betriebstechnischen Anlagen, Kraftanlagen, Kaltwasseranlagen, Klima- und Lüftungsanlagen, Kühlräumen, Kühlhäusern, im allgemeinen Hochbau, im Fahrzeug sowie im Schiffsbau.

Wesentlich für die Lösung der gestellten Aufgabe ist im Rahmen der Erfindung, daß ein Luftaustausch zwischen Außenluft und Dämmung mit Hilfe eines luft- und diffusionsdichten Schutzmantels vollständig unterbunden und damit die gefürchtete Durchfeuchtung von Dämmstoffen, die in Verbindung mit Gefriereffekten auch zur Zerstörung der Dämmung führen kann, ausgeschlossen wird. In gleicher Weise bedeutsam ist dabei, daß durch die Verwendung eines besonders ausgestalteten Schutzmantels nicht nur die Luft- und Diffusionsdichtheit erzielt, sondern auch gewährleistet wird, daß diese Eigenschaft auch dauerhaft gegeben ist und Beeinträchtigungen durch besondere mechanische Beanspruchungen weitestgehend ausgeschlossen werden.

Die Dicke des Schutzmantels ist im Regelfalle deutlich geringer als die Dicke der Dämmaterialschicht, aber es kann bevorzugt der Aufbau so dimensioniert werden, daß sich zusätzlich ein Schallschutz ergibt, was bei Fallrohren von besonderer Bedeutung sein kann, da in diesem Falle die Luftschalldämmung eine wesentliche Rolle spielt.

Bevorzugt wird im Falle der Verwendung einer Aluminiumfolie als Schutzmantel eine Anbringung dieses Schutzmantels im radial äußeren Bereich des Dämmaterials vorgenommen, wobei bevorzugt die Aluminiumfolie von einer dünnen Schicht aus Schaumstoffmaterial umgeben ist, deren Außenfläche verstärkt ausgebildet und vorteilhafterweise mit einem integrierten Netz in Verbindung mit einer Kunststoffolie ausgerüstet ist.

Nach einer weiteren Ausgestaltung sind die beidseitig der Schutzummantelung gelegenen Dämmaterialien von unterschiedlichem Aufbau, wobei Kombinationen von Schaumstoff/Schaumstoff und Schaumstoff/Fasermaterialien vorteilhaft sein können.

Ein weiterer günstiger Effekt der Erfindung besteht darin, daß der insbesondere aus metallischer Folie bestehende Schutzmantel über die Länge einer Rohrdämmung einen mechanischen Versteifungseffekt erbringt, der sich bei Einsatz in Verbindung mit Kunststoffrohren und auch in Verbindung mit Kupferrohren vorteilhaft auswirkt.

Nach einer weiteren Ausgestaltung der Erfindung wird für den Schutzmantel eine ein- oder beidseitig mit einer Kunststoffolie kaschierte Aluminiumfolie verwendet. In weiteren Anwendungsfällen ist es günstig, als Schutzmantel eine Kunststoffolie zu verwenden, die mit Aluminium beschichtet oder bedampft ist, wobei sich bei solchen Verbundstoffen die Eigenschaften der einzelnen Bestandteile gegenseitig fördernd unterstützen können.

Es ist für bestimmte Fälle auch von Vorteil, mehr als einen Schutzmantel in die Dämmung zu integrieren.

Im Falle der Verwendung eines außenliegenden Schutzmantels aus beispielsweise Aluminiumfolie ist es vorteilhaft, die außenliegende Seite mit einer Schutzschicht, z.B. in Form einer gitter- oder netzverstärkten Folie zu verwenden. Auf diese Weise werden besonders robuste Produkte erhalten.

Nach einer weiteren Besonderheit der Erfindung werden Stoßstellen zwischen aufeinanderfolgenden Dämmabschnitten sowie Längsschnittstellen jeweils durch einen Abdeckstreifen aus dampfdichtem Folienmaterial verschlossen, wobei diese Abdeckstreifen insbesondere unmittelbar auf die mit der Dämmaterialschicht verbundene Folie aufgebracht sind und ein gegenseitiger Versatz der Stoßstellen zwischen Dämmmaterialschicht und Schutzmantel vorgenommen wird, so daß sich bezüglich des zu verhindernden Eindringens von Feuchtigkeit eine Art Labyrinthabschluß ergibt, der allen Anforderungen hinsichtlich der Dichtheit entspricht.

Ein Ausführungsbeispiel der Erfindung wird unter Bezugnahme auf die Zeichnung erläutert; in der Zeichnung zeigt:

Fig. 1   eine schematische Querschnittsansicht einer rohrförmigen Dämmung, wie sie beispielsweise in Verbindung mit Kaltwasser- und Kältemittelleitungen verwendet wird, und

Fig. 2   eine schematische Darstellung zur Erläuterung der Ausbildung eines Abzweigs unter Verwendung der Dämmanordnung nach der Erfindung.

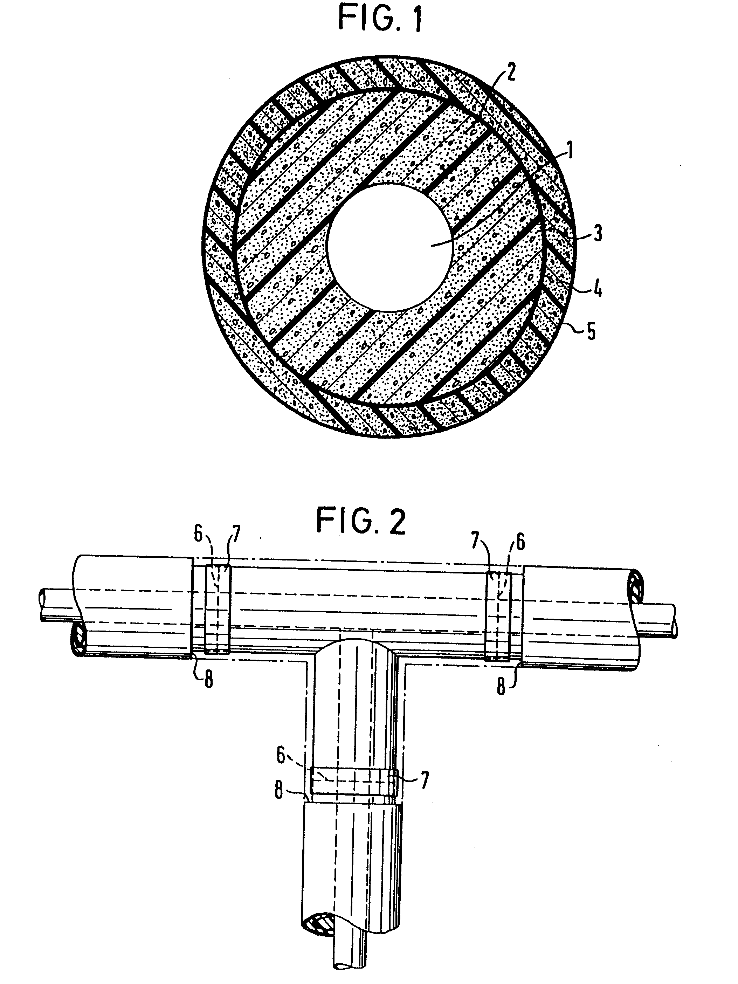

Die Querschnittsansicht nach Fig. 1 zeigt den Aufnahmeraum 1 für das jeweilige Rohr, die von einer ersten, beispielsweise aus Schaumstoff bestehenden Dämmaterialschicht 2 umschlossen ist.

An diese Dämmaterialschicht 2 schließt sich eine ebenfalls umfangsmäßig geschlossene Lage 3 aus dampfdichtem Material an. Diese Lage besteht vorzugsweise aus einer Metallfolie, insbesondere einer Aluminiumfolie, die ein- oder beidseitig mit einer Kunststoffschicht kaschiert sein kann.

Auf diese dampfdichte Lage 3 folgt eine Schicht 4 aus Dämmmaterial, die wiederum aus Schaumstoff aber auch aus einem
Fasermaterial bestehen kann.

Umschlossen wird die gesamte Dämmanordnung von einer Schutzhülle 5, die vorzugsweise aus einer mit einem Gitternetz
verstärkten Folie besteht.

Fig. 2 zeigt die Ausgestaltung eines Abzweigs unter Verwendung der anhand der Fig. 1 geschilderten Dämmanordnung.

Das Rohr ist mit einem Dämmaterial aus geschlossenzelligem
PE-Schaum mit hohem Wasserdampfdiffusionswiderstandsfaktor
ummantelt, auf den außenseitig eine dampfdichte Metallfolie
kaschiert ist. Für den T-Abzweig ist dieser erste Bestandteil der Dämmanordnung als Formteil ausgebildet, das längs
Mantellinien geschlitzt ist und somit problemfrei auf den
Rohrabzweig aufgebracht werden kann. Die Stoßstellen 6 zwischen diesem Formteil und den anschließenden geraden Abschnitten sind jeweils mit einem Metallfolienstreifen 7
dampfdicht verschlossen. In gleicher Weise werden die Längsschlitze mit entsprechendem Metallfolienstreifen dampfdicht
abgedeckt und verschlossen.

Der nach diesen Montagevorgängen aufzubringende Schutzmantel
in Form einer Schutz- und Polsterlage ist in entsprechender
Weise für den T-Abzweig vorgefertigt, jedoch so bemessen, daß
die einzelnen Schenkellängen größer sind als die entsprechenden
Schenkellängen der innenliegenden Dämmaterialschicht. Auf
diese Weise liegen die sich ergebenden Stoßstellen 8 zwischen
den Schutzmantelabschnitten versetzt zu den Stoßstellen 6,
wodurch die innenliegenden Stoßstellen 6 voll abgedeckt werden und sich eine labyrinthdichtungsartige Verbindungsstelle ergibt, die allen Anforderungen hinsichtlich der Luft- und
Dampfdichtigkeit entspricht.

Auch die außenliegenden Stoßstellen 8 und die entsprechenden
Längsschlitze werden noch mit geeigneten Verschlußstreifen
versehen.

In gleicher Weise wie der geschilderte T-Abzweig können
weitere Verbindungselemente und Formteile vorgefertigt werden, insbesondere für Bögen und Winkel unterschiedlicher
Art.

# MANITZ, FINSTERWALD & ROTERMUND 0222227

DEUTSCHE PATENTANWÄLTE
DR. GERHART MANITZ · DIPL.-PHYS.
MANFRED FINSTERWALD · DIPL.-ING., DIPL.-WIRTSCH.-ING.
HANNS-JÖRG ROTERMUND · DIPL.-PHYS
DR. HELIANE HEYN · DIPL.-CHEM.
WERNER GRAMKOW · DIPL.-ING. (1939-1982)

BRITISH CHARTERED PATENT AGENT
JAMES G. MORGAN · B. SC (PHYS.). D.M S

ZUGELASSENE VERTRETER BEIM EUROPÄISCHEN PATENTAMT
REPRESENTATIVES BEFORE THE EUROPEAN PATENT OFFICE
MANDATAIRES AGRÉÉS PRÈS L'OFFICE EUROPÉEN DES BREVETS

8000 MÜNCHEN 22 · ROBERT-KOCH-STRASSE 1
TELEFON (0 89) 22 42 11 · TELEX 5 29 672 PATMF
TELEFAX (0 89) 29 75 75 (Gr. II + III)
TELEGRAMME INDUSTRIEPATENT MÜNCHEN

Firma
E. Missel GmbH & Co.
Postfach 50 07 64

7000 Stuttgart 50

München, den     **2 3. 10. 86**
P/Ha-M 3730

---

Dämmanordnung für
Rohrleitungen und dergleichen

---

P a t e n t a n s p r ü c h e :

1. Dämmanordnung für Rohrleitungssysteme, bestehend aus einer rohrumschließenden Dämmaterialschicht und einer luft- und diffusionsdichten Ummantelung,
dadurch  g e k e n n z e i c h n e t ,
daß die Dämmaterialschicht (2) aus einem geschlossenzelligen Schaumstoff mit hohem Wasserdampfdiffusionswiderstand besteht und daß die Ummantelung als mehrschichtiger, eine geringere Wandstärke als die Dämmaterialschicht (2) aufweisenden Schutzmantel mit zumindest einer metallischen Folie und/oder einer diffusionsdichten Kunststoffolie sowie einer außenliegenden, insbesondere in eine Weichmaterialschicht (4) eingebetteten oder mit dieser verbundenen Schutzfolie (5) besteht.

2. Dämmanordnung nach Anspruch 1, dadurch g e k e n n z e i c h n e t , daß die luft- und diffusionsdichte Folie (3) des Schutzmantels zumindest mit der innenliegenden Dämmaterialschicht (2) vollflächig und fest verbunden ist.

3. Dämmanordnung nach Anspruch 1 oder 2, dadurch g e k e n n z e i c h n e t, daß die Weichmaterialschicht (4) aus Schaumstoff, insbesondere geschlossenzelligem Schaumstoff besteht.

4. Dämmanordnung nach Anspruch 1 oder 2, dadurch g e k e n n z e i c h n e t, daß die Weichmaterialschicht (4) aus einem mit einer Folie ummantelten Fasermaterial besteht.

5. Dämmanordnung nach einem der vorhergehenden Ansprüche, dadurch g e k e n n z e i c h n e t , daß die luft- und diffusionsdichte Folie (3) aus einer Aluminiumfolie oder einer mit Aluminium bedampften Kunststoffolie besteht.

6. Dämmanordnung nach einem oder mehreren der vorhergehenden Ansprüche, dadurch g e k e n n z e i c h n e t , daß die Schutzfolie (5) aus einer außenliegenden Kunststoffolie mit integriertem oder aufkaschiertem, rißfestem Gewebe mit Netzstruktur besteht.

7. Dämmanordnung nach einem der vorhergehenden Ansprüche, dadurch g e k e n n z e i c h n e t , daß der Schutzmantel bezüglich der mit der luft- und diffusionsdichten Folie (3) fest verbundenen Dämmaterialschicht (2) durch Klemmschluß verbunden ist.

8. Dämmanordnung nach einem oder mehreren der vorhergehenden Ansprüche, dadurch g e k e n n z e i c h n e t , daß Stoßstellen (6) zwischen aufeinanderfolgenden Dämmabschnitten sowie Längsschnittstellen jeweils durch einen Abdeckstreifen (7) aus dampfdichtem Folienmaterial verschlossen und diese Abdeckstreifen insbesondere unmittelbar auf die mit der Dämmaterialschicht (2) verbundene Folie (3) aufgebracht sind.

9. Dämmanordnung nach einem der vorhergehenden Ansprüche, dadurch g e k e n n z e i c h n e t , daß die Stoßstellen (6) zwischen aufeinanderfolgenden Dämmabschnitten und die Stoßstellen (8) zwischen aufeinanderfolgenden Schutzmantelabschnitten gegeneinander versetzt sind.

10. Dämmanordnung nach einem oder mehreren der vorhergehenden Ansprüche, dadurch g e k e n n z e i c h n e t , daß der Schutzmantel zumindest abschnittsweise eine gewellte Oberfläche aufweist.

1/1

FIG. 1

FIG. 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| A | EP-A-0 084 088 (FELTEN & GUILLEAUME) <br> * Anspruch 1; Figuren * | 1 | F 16 L 59/14 |
| A | * Anspruch 3 * | 5 | |
| | --- | | |
| A | EP-A-0 106 328 (RUOFF SCHÄFER) <br> * Anspruch 11 * | 3 | |
| A | * Anspruch 1 * | 6 | |
| | --- | | |
| A | FR-A-2 191 061 (MIDWESCO ENTERPRISE, INC.) <br> * Seite 3, Zeilen 21-24; Figur 2 * | 9 | |
| | ----- | | |

RECHERCHIERTE SACHGEBIETE (Int Cl 4)

F 16 L 59/00

Der vorliegende Recherchenbericht wurde für alle Patentansprüche erstellt

| Recherchenort | Abschlußdatum der Recherche | Prüfer |
|---|---|---|
| DEN HAAG | 27-01-1987 | BARTSCH A.W. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument
& : Mitglied der gleichen Patentfamilie, übereinstimmendes Dokument

EPA Form 1503 03 82